# EUROPÄISCHE PATENTANMELDUNG

(11) **EP 1 022 842 A1**
(43) Veröffentlichungstag der Anmeldung: **26.07.2000**
(21) Anmeldenummer: 00100872.1
(22) Anmeldetag: 18.01.2000
(51) Int. Cl.: H02K 15/00, H02K 15/06

(54) **Verfahren und Vorrichtung zum axialen Einziehen von Spulen in Statoren oder Rotoren elektrischer Maschinen**

(30) Priorität: 21.01.1999 DE 19902198
(71) Anmelder: Elmotec Elektro-Motoren-Technik GmbH, 61184 Karben (DE)
(72) Erfinder: Sadiku, Sadik, 63543 Neuberg (DE)
(74) Vertreter: Jochem, Bernd, Dipl.-Wirtsch.-Ing.

(57) **Zusammenfassung**

Es werden vorgewickelte Spulen axial in Nuten von Statoren oder Rotoren elektrischer Maschinen eingezogen. Dies geschieht mittels eines durch deren Bohrung hindurch vorschiebbaren Einziehsterns, hinter dem während des Einziehens Deckstreifen (16) aus Isoliermaterial in die Nuten (12) vor deren Öffnungsschlitze geschoben werden. Um zu verhindern, daß beim Zurückziehen des Einziehsterns (28) die Deckstreifen (16) wieder teilweise aus den Nuten (12) gezogen werden, ist vorgesehen, daß die Deckstreifen (16) während eines bestimmten ersten Abschnitts des Rückhubs des Einziehsterns (28) gegen eine Rückwärtsbewegung abgestützt werden, z. B. dadurch, daß die Schieber während der ersten Phase des Rückhubs des Einziehsterns (28) in ihrer vorgeschobenen Stellung stehen bleiben.

## Beschreibung

Die Erfindung betrifft ein Verfahren zum axialen Einziehen vorgewickelter Spulen in Nuten von Statoren oder Rotoren elektrischer Maschinen mittels eines durch die Bohrung der Statoren bzw. Rotoren hindurch vorschiebbaren Einziehsterns, wobei während des Einziehens hinter dem Einziehstern Deckstreifen aus Isoliermaterial in die Nuten vor deren Öffnungsschlitze geschoben werden. Die Erfindung betrifft weiterhin eine zur Durchführung des genannten Verfahrens geeignete Vorrichtung.

Die gebräuchlichen Einziehvorrichtungen bestehen üblicherweise aus ringförmig angeordneten, parallelen Einziehlamellen zum Abdecken der scharfen Kanten des Stator- oder Rotorblechpakets an den Öffnungsschlitzen der Nuten, unmittelbar radial außerhalb der Einziehlamellen ringförmig angeordneten, parallelen Deckstreifenlamellen zur Führung der Deckstreifen und einem in dem von den Lamellen umgrenzten Raum axial verschieblichen Einziehstern. Nachdem die einzuziehenden Spulen in die Schlitze zwischen den Lamellen eingehängt und ein Stator- oder Rotorblechpaket auf die freien Enden der Einziehlamellen aufgesetzt worden ist, fährt der Einziehstern zu dem Blechpaket vor und durch dessen Bohrung hindurch, wobei er die Spulen mitnimmt und in die Nuten des Blechpakets einzieht. Zur Funktionsweise einer derartigen Einziehvorrichtung wird auf die DE-PS 19 18 485 und die DE-PS 26 49 119 Bezug genommen.

Der Einziehstern hat üblicherweise die Form eines Pilzkopfes mit radialen Vorsprüngen, die durch die Öffnungsschlitze der Nuten des Blechpakets reichen und die Spulendrähte in den Nuten von den Öffnungsschlitzen zurückdrängen, so daß die Deckstreifen in einer Lage unmittelbar vor den Öffnungsschlitzen axial in die Nuten eingeschoben werden können. In seiner ganz durch die Bohrung des Stators oder Rotors vorgeschobenen Endstellung drückt der Einziehstern auch die über die Endfläche des Blechpakets vorstehenden Teile der Spulen, die sog. Wicklungsköpfe, radial nach außen.

Bisher werden nach Vollendung des Einziehhubs die Schieber, die zum Einschieben der Deckstreifen in die Nuten dienen, gleichzeitig mit dem Einziehstern zurückgezogen, der bei dieser Bewegung mit seinen radialen Vorsprüngen reibend an den Deckstreifen entlang gleitet. Dabei kann es geschehen, daß der Einziehstern einzelne Deckstreifen teilweise wieder aus den Nuten herauszieht. Die betreffenden Statoren oder Rotoren sind Ausschuß.

Der Erfindung liegt die Aufgabe zugrunde, die Qualität der Produktion zu verbessern, und diese Aufgabe wird nach dem Vorschlag der Erfindung verfahrensmäßig dadurch gelöst, daß nach dem vollständigen Einziehen der Spulen die in die Nuten geschobenen Deckstreifen während eines bestimmten ersten Abschnitts des Rückhubs des Einziehsterns gegen eine Rückwärtsbewegung abgestützt werden.

Die Erfindung hat den Vorteil, daß nach dem teilweisen Zurückziehen des Einziehsterns aus der am weitesten vorgeschobenen Endstellung die von ihm radial nach außen zurückgedrängten Spulen teilweise radial nach innen zurückfedern können, wobei sie die Deckstreifen neben den Öffnungsschlitzen fest gegen die Nutenwand drücken. Die auf diese Weise festgeklemmten Deckstreifen behalten danach ihre vorbestimmte axiale Lage, auch wenn im weiteren Verlauf des Rückhubs des Einziehsterns auch die Abstützung der Deckstreifen zurückgezogen wird.

Die zur Durchführung des erfindungsgemäß Verfahren vorgeschlagene Vorrichtung hat in teilweiser Übereinstimmung der Vorrichtung gemäß DE-PS 26 49 119 eine Halterung für einen Stator oder Rotor einer elektrischen Maschine, einen durch seine Bohrung hindurch vorschiebbaren Einziehstern zum Einziehen von Spulen in seine Nuten sowie Deckstreifenlamellen und Schieber zum Einführen von Deckstreifen aus Isoliermaterial in die Nuten des Stators oder Rotors vor deren Öffnungsschlitze während des Vorschiebens des Einziehsterns und ist gegenüber der bekannten Vorrichtung dadurch gekennzeichnet, daß mindestens während eines bestimmten ersten Abschnitts des Rückhubs des Einziehsterns die Schieber in ihrer vorgeschobenen Stellung stehen bleiben, so daß sie die Deckstreifen axial abstützen und daran hindern, vom Einziehstern infolge Reibung mit zurückgezogen zu werden.

Bei der Vorrichtung gemäß DE-PS 26 49 119 werden zwar auch während des Rückhubs des Einziehsterns Deckstreifen axial gegen Zurückziehen abgestützt, dort handelt es sich jedoch um einen erst beim nächsten Einziehhub in die Nuten eines nachfolgenden Statorblechpakets einzuschiebenden Satz weiterer Deckstreifen, die in einem ersten Förderschritt durch zusätzliche hintere Schieber zunächst nur aus dem Deckstreifenmagazin heraus aber nicht gleich in demselben Schritt bis in das Statorblechpaket hineingeschoben worden sind und nun durch kleine, an den Deckstreifenlamellen angebrachte Anschlagflächen in Rückwärtsrichtung gehalten werden müssen, damit sie durch die beim Rückhub an ihnen entlang gleitenden vorderen Schieber nicht mitgenommen werden.

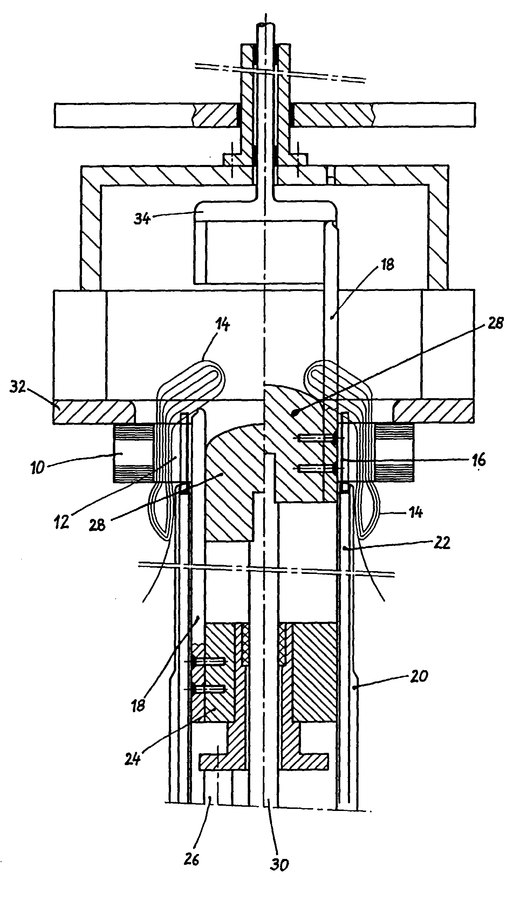

Zur Beschreibung eines Ausführungsbeispiels der Erfindung wird auf die beigefügte Zeichnung Bezug genommen. Dort ist ein Statorblechpaket 10 gezeigt, in dessen Nuten 12 spulen 14 eingezogen werden. Die Nuten 12 haben in üblicher Weise auf der radial inneren Seite zur Statorbohrung hin Öffnungsschlitze, die sich über die Höhe des Statorblechpakets 10 erstrecken. Durch die Öffnungsschlitze werden die Spulen 14 in die Nuten 12 eingeführt. Danach werden die Öffnungsschlitze der Nuten durch Streifen aus Isoliermaterial, sog. Deckstreifen 16, verschlossen, welche die Spulen 14 in den Nuten 12 zurückhalten.

Die in der Zeichnung gezeigte Einziehvorrichtung, die zum Einziehen der Spulen 14 in das Statorblechpaket 10 und zum Einschieben der Deckstreifen 16 in die Nuten 12 dient, hat einen herkömmlichen Aufbau. Sie besteht aus einer ringförmigen Anordnung paralleler Einziehlamellen 18, welche die inneren Zähne des Statorblechpakets 10, insbesondere deren scharfkantige Ecken an den Öffnungsschlitzen der Nuten 12, abdecken und dadurch Beschädigungen des Spulendrahts verhindern. Unmittelbar radial außerhalb der Einziehlamellen 18 befindet sich eine ringförmige Anordnung paralleler Deckstreifenlamellen 20, die feststehend sind und bis zur unteren Stirnfläche des Statorblechpakets 10 reichen. Die Deckstreifenlamellen 20 sind mit Bezug auf die Einziehlamellen 18 am Umfang so angeordnet, daß jeweils ein an zwei benachbarten Deckstreifenlamellen 20 geführter Deckstreifen 16, der durch axial verschiebliche als Deckstreifenstempel bezeichnete Schieber 22 nach oben geschoben wird, jeweils in eine Nut 12 neben deren Öffnungsschlitz eingeführt wird. Die Länge der Deckstreifen 16 ist nur wenig größer als die Höhe des Statorblechpakets 10.

Die Einziehlamellen 18 sind an ihrem unteren Ende an einen Träger 24 angeschraubt, der während der gesamten Einziehoperation ortsfest gehalten werden kann. In dieser Stellung ragen, wie auf der linken Seite der Zeichnung gezeigt, die freien Enden der Einziehlamellen 18 um etwas mehr als die Höhe des Statorblechpakets 10 über die freien Enden der Deckstreifenlamellen 20 hinaus. Wenn nach einer Serie von Statorblechpaketen 10 bestimmter Höhe eine andere Serie mit anderer Höhe mit Spulen 14 versehen werden soll, kann mittels eines geeigneten axialen Verstellantriebs 26 die Höhe des Trägers 24 mitsamt der Einziehlamellen 18 verändert werden.

Im zentralen Raum zwischen den Einziehlamellen 18 ist ein Einziehstern 28 axial verschieblich angeordnet, der mit radialen Vorsprüngen zwischen den Einziehlamellen 18 hindurch bis in die Nuten 12 des Statorblechpakets 10 reicht. Die mit 30 bezeichnete Antriebsstange des Einziehsterns 28 erstreckt sich zentral durch den Träger 24 der Einziehlamellen 18. Sowohl der nur mit einer Antriebsstange 26 angedeutete Verstellantrieb der Einziehlamellen 18 als auch der Verfahrantrieb des Einziehsterns 28 als auch schließlich der Antrieb eines nicht gezeigten Trägers der Deckstreifenstempel 22 können steuerbare elektrische Antriebe sein, deren Drehbewegung z.B. durch ein Schraubgetriebe in die axiale Längsbewegung umgesetzt werden kann.

Wie auf der rechten Seite der Zeichnung gezeigt, können in bekannter Weise an kritischen Stellen einige Lamellen 18 mit ihrem unteren Ende an den Einziehstern 28 angeschraubt sein. Man spricht dann von "mitfahrenden Lamellen".

Vor Beginn eines Einziehvorgangs werden die Spulen 14 bei nach unten zurückgezogenem Einziehstern 28 in solcher Stellung am Umfang in die Zwischenräume zwischen den Einziehlamellen 18 eingeengt, daß sie anschließend, nachdem das Statorblechpaket 10 bis zur Anlage an den oberen Enden der Deckstreifenlamellen 20 auf die oberen Enden der Einziehlamellen 18 aufgesteckt worden ist, durch Hochfahren des Einziehsterns 28 in die jeweils für sie vorgesehene Nuten 12 eingezogen werden. Während des Einziehhubs wird das Statorblechpaket 10 durch einen Niederhalter 32 ortsfest gehalten. Die Zeichnung zeigt weiterhin die Verwendung eines sog. Ausrichtsterns 34, der dazu dient, die Einziehlamellen 18 parallel zu halten, aber im Zusammenhang der vorliegenden Erfindung keine Rolle spielt.

Auf der rechten Seite der Zeichnung ist der Einziehstern 28 in seiner obersten Endstellung gezeigt, in der er die Spulen 14 vollständig durch die Öffnungsschlitze der Nuten 12 gezogen hat. Auch im Bereich der Oberkante des Statorblechpakets 10 sind in dieser obersten Stellung des Einziehsterns 28 die Spulendrähte durch die radialen Vorsprünge des Einziehsterns 28 vom Öffnungsschlitz der Nut weg radial nach außen gedrückt. Während des Einziehhubs folgen die Deckstreifen 16, während sie von den Deckstreifenstempeln 22 vorgeschoben werden, mit ihrer Vorderkante der pilzkopfförmig gewölbten Oberseite bzw. den radialen Vorsprüngen des Einziehsterns 28, bis auch sie ein wenig über die obere Stirnfläche des Statorblechpakets 10 hinausragen. Sie sind zwar üblicherweise mit einem Kragen versehen, der ein Zurückrutschen nach unten verhindern soll, aber wenn bei dem herkömmlichen Verfahren der Einziehstern 28 aus seiner gezeigten obersten Stellung nach unten zurückzufahren beginnt und gleichzeitig auch die Deckstreifenstempel 22 nach unten zurückgezogen werden, kommt es doch häufig vor, daß die Deckstreifen 16 infolge Reibung teilweise wieder nach unten aus den Nuten 12 des Statorblechpakets 10 herausgezogen werden. Um dies zu verhindern, ist bei der gezeigten Vorrichtung vorgesehen, daß der nicht gezeigte axiale Antrieb der Deckstreifenstempel 22 diese noch in der obersten Stellung hält, während der Einziehstern 28 den ersten Abschnitt von z.B. 10 bis 15 mm seines Rückwegs nach unten zurücklegt (siehe die auf der linken Seite der Zeichnung gezeigte Zwischenphase). Nach diesem anfänglichen Zurückziehen des Einziehsterns 28 können die von der Oberseite des Einziehsterns 28 radial nach außen zurückgedrängten oberen Bereiche der Spulen 14 radial nach innen bis gegen die die Öffnungsschlitze verschließenden Deckstreifen 16 zurückdrängen. Sie klemmen dabei die Deckstreifen 16 fest gegen die Nutwand, und wenn im Anschluß an die auf der linken Seite der Zeichnung gezeigte Zwischenphase dann beim weiteren Rückhub des Einziehsterns 28 auch die Deckstreifenstempel 22 mit zurückgezogen werden, besteht keine Gefahr mehr, daß auch die Deckstreifen 16 mitgenommen und aus ihrer bestimmungsgemäßen Lage verschoben werden.

## Patentansprüche

1. Verfahren zum axialen Einziehen vorgewickelter Spulen in Nuten von Statoren oder Rotoren elektrischer Maschinen mittels eines durch die Bohrung der Statoren bzw. Rotoren hindurch vorschiebbaren Einziehsterns (28), wobei während des Einziehens hinter dem Einziehstern (28) Deckstreifen (16) aus Isoliermaterial in die Nuten (12) vor deren Öffnungsschlitze geschoben werden, **dadurch gekennzeichnet,** daß nach dem vollständigen Einziehen der Spulen (14) die in die Nuten (12) geschobenen Deckstreifen (16) während eines bestimmten ersten Abschnitts des Rückhubs des Einziehsterns (28) gegen eine Rückwärtsbewegung abgestützt werden.

2. Verfahren nach Anspruch 1, **dadurch gekennzeichnet,** daß die Deckstreifen (16) durch die Antriebsorgane (22), die sie in die Nuten (12) geschoben haben, abgestützt werden.

3. Vorrichtung zur Durchführung des Verfahrens nach Anspruch 1 mit einer Halterung (18, 20, 32) für einen Stator (10) oder Rotor einer elektrischen Maschine, einem durch seine Bohrung hindurch vorschiebbaren Einziehstern (28) zum Einziehen von Spulen (14) in seine Nuten (12) sowie Deckstreifenlamellen (20) und Schiebern (22) zum Einführen von Deckstreifen (16) aus Isoliermaterial in die Nuten (12) des Stators (10) oder Rotors vor deren Öffnungsschlitze während des Vorschubs des Einziehsterns (28), **dadurch gekennzeichnet,** daß mindestens während eines bestimmten ersten Abschnitts des Rückhubs des Einziehsterns (28) die Schieber (22) in ihrer vorgeschobenen Stellung stehen bleiben.
